# EUROPEAN PATENT APPLICATION

(11) **EP 3 109 800 A1**
(43) Date of publication of application: **28.12.2016**
(21) Application number: 15199221.1
(22) Date of filing: 10.12.2015
(51) Int. Cl.: G06N 3/00, B25J 11/00, G06F 3/01, G06F 3/16

(54) **HUMAN-COMPUTER INTERACTIVE METHOD BASED ON ARTIFICIAL INTELLIGENCE AND TERMINAL DEVICE**

(30) Priority: 24.06.2015 CN 201510355757
(71) Applicant: Baidu Online Network Technology (Beijing) Co., Ltd, Beijing 100085 (CN)
(72) Inventor: LI, Jialin, 100085 Beijing (CN); JING, Kun, 100085 Beijing (CN); GE, Xingfei, 100085 Beijing (CN); WU, Hua, 100085 Beijing (CN); XU, Qian, 100085 Beijing (CN); WANG, Haifeng, 100085 Beijing (CN); SUN, Wenyu, 100085 Beijing (CN); WU, Tian, 100085 Beijing (CN); GUAN, Daisong, 100085 Beijing (CN)
(74) Representative: Papa, Elisabetta

(57) **Abstract**

The present disclosure provides a human-computer interactive method and apparatus based on artificial intelligence, and a terminal device. The human-computer interactive method based on artificial intelligence includes: receiving a multimodal input signal, the multimodal input signal including at least one of a speech signal, an image signal and an environmental sensor signal; determining an intention of a user according to the multimodal input signal; processing the intention of the user to obtain a processing result, and feeding back the processing result to the user.

## Description

### FIELD

The present disclosure relates to a smart terminal technology, and more particularly to a human-computer interactive method based on artificial intelligence, and a terminal device.

### BACKGROUND

With the trend of ageing, low birth rate, and urbanization of the society, following problems are brought out.
1. Young people have higher work stress and do not have enough time to accompany children and parents at home.
2. It is more and more popular that parents and children live at different places. Communication costs are highly increased due to family members and relatives living at different places, and there is not a close, effective and convenient communication mode.
3. Old parents and young children need more emotion care, communication, education, and information obtaining assistance, which are difficult to be obtained if the children or parents are not at home.
4. Young people need to communicate with their "home" (including various household appliances) and "families" (including parents and children) anytime and anywhere when working outside. Since this communication serves for families, a lower usage difficulty and a higher intimacy are required.
5. A closer and more convenient contact means is required for families separated long distance. This is because, a person wishes to get together with his/her family members anytime when he/she is forced to be separate with family members.
6. Old parents and young children need daily care, emotion accompanying and various services, however, young people taking responsibility for "care, accompanying, help, education" have heavy work and cannot accompany parents and children.

However, in the related art, there is no solution with respect to above problems, and a high functioning, high accompanying and intelligent human-computer interaction cannot be performed. Thus, requirements of users cannot be satisfied, and user experience is poor.

### SUMMARY

Embodiments of the present disclosure seek to solve at least one of the problems existing in the related art to at least some extent.

Accordingly, a first objective of the present disclosure is to provide a human-computer interactive method based on artificial intelligence, which may realize a good human-computer interactive function and may realize a high functioning, high accompanying and intelligent human-computer interaction.

A second objective of the present disclosure is to provide a human-computer interactive apparatus based on artificial intelligence.

A third objective of the present disclosure is to provide a terminal device.

In order to achieve above objectives, according to embodiments of a first aspect of the present disclosure, a human-computer interactive method based on artificial intelligence is provided, and the method includes: receiving a multimodal input signal, the multimodal input signal includes at least on of a speech signal, an image signal and an environmental sensor signal; determining an intention of a user according to the multimodal input signal; processing the intention of the user to obtain a processing result, and feeding back the processing result to the user.

With the human-computer interactive method based on artificial intelligence, after the multimodal input signal is received, the intention of the user is determined according to the multimodal input signal, and then the intention of the user is processed and the processing result is feedback to the user, thus realizing a good human-computer interactive function, realizing a high functioning, high accompanying and intelligent human-computer interaction, and improving user experience.

In order to achieve above objectives, according to embodiments of a second aspect of the present disclosure, a human-computer interactive apparatus based on artificial intelligence is provided, and the apparatus includes: a receiving module, configured to receive a multimodal input signal, the multimodal input signal including at least one of a speech signal, an image signal and an environmental sensor signal; an intention determining module, configured to determine an intention of a user according to the multimodal input signal received by the receiving module; and a processing module configured to process the intention of the user to obtain a processing result and to feed back the processing result to the user.

With the human-computer interactive apparatus based on artificial intelligence, after the receiving module receives the multimodal input signal, the intention determining module determines the intention of the user according to the above multimodal input signal, and then the processing module processes the intention of the user and feeds back the processing result to the user, thus realizing a good human-computer interactive function, realizing a high functioning, high accompanying and intelligent human-computer interaction, and improving user experience.

In order to achieve above objectives, according to embodiments of a third aspect of the present disclosure, a terminal device is provided, and the terminal device includes a receiver, a processor, a memory, a circuit board and a power circuit. The circuit board is arranged inside a space enclosed by a housing, the processor and the memory are arranged on the circuit board, the power circuit is configured to supply power for each circuit or component of the terminal device, the memory is configured to store executable program codes, the receiver is configured to receive a multimodal input signal, the multimodal input signal including at least one of a speech signal, an image signal and an environmental sensor signal, and the processor is configured to run a program corresponding to the executable program codes by reading the executable program codes stored in the memory, so as to execute following steps of determining an intention of a user according to the multimodal input signal, processing the intention of the user to obtain a processing result, and feeding back the processing result to the user.

With the terminal device according to embodiments of the present disclosure, after the receiver receives the multimodal input signal, the processor determines the intention of the user according to the multimodal input signal and then processes the intention of the user and feeds back the processing result to the user, thus realizing a good human-computer interactive function, realizing a high functioning, high accompanying and intelligent human-computer interaction, and improving user experience.

In order to achieve the above objectives, embodiments of a fourth aspect of the present disclosure provide a computer readable storage medium. The computer readable storage medium comprises a computer program for executing the method according to the first aspect of the present disclosure, when running on a computer.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a flow chart of a human-computer interactive method based on artificial intelligence according to an embodiment of the present disclosure;
Fig. 2 is a block diagram of a human-computer interactive apparatus based on artificial intelligence according to an embodiment of the present disclosure;
Fig. 3 is a block diagram of a human-computer interactive apparatus based on artificial intelligence according to another embodiment of the present disclosure;
Fig. 4 is a block diagram of a terminal device according to an embodiment of the present disclosure;
Fig. 5 is a schematic diagram of an intelligent robot according to a specific embodiment of the present disclosure;
Fig. 6 is a schematic diagram illustrating an interaction via a screen of an intelligent robot according to an embodiment of the present disclosure.

### DETAILED DESCRIPTION

Reference will be made in detail to embodiments of the present disclosure. The embodiments described herein with reference to drawings are explanatory, illustrative, and used to generally understand the present disclosure. The embodiments shall not be construed to limit the present disclosure. The same or similar elements and the elements having same or similar functions are denoted by like reference numerals throughout the descriptions. In contrast, the present disclosure may include alternatives, modifications and equivalents within the spirit and scope of the appended claims.

In order to solve the problem in the related art that a high functioning, high accompanying and intelligent human-computer interaction cannot be performed, the present disclosure provides a high functioning and high accompanying human-computer interaction based on artificial intelligence (AI for short), which is a new technical science studying and developing theories, methods, techniques and application systems for simulating, extending and expanding human intelligence. The artificial intelligence is a branch of computer science, which attempts to know the essence of intelligence and to produce an intelligent robot capable of acting as a human. The researches in this field include robots, speech recognition, image recognition, natural language processing and expert systems, etc.

The artificial intelligence is a simulation to information process of human consciousness and thinking. The artificial intelligence is not human intelligence, but can think like human and can surpass the human intelligence. The artificial intelligence is a science including wide content, consists of different fields, such as machine learning, computer vision, etc. In conclusion, a main objective of the artificial intelligence is making the machine able to complete some complicated work generally requiring human intelligence.

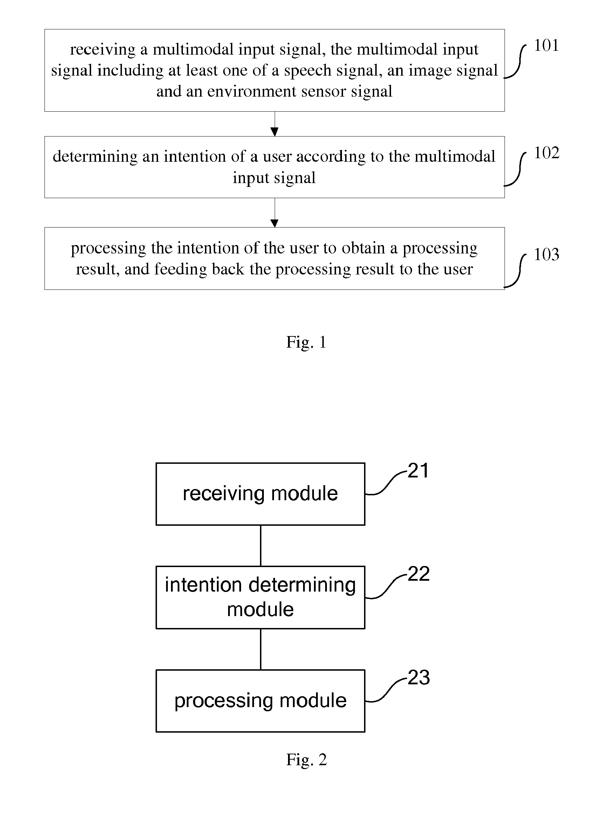

Fig. 1 is a flow chart of a human-computer interactive method based on artificial intelligence according to an embodiment of the present disclosure. A shown in Fig. 1, the method may include following steps.

At step 101, a multimodal input signal is received. The multimodal input signal includes at least one of a speech signal, an image signal and an environmental sensor signal.

Specifically, the speech signal may be input by the user via a microphone, the image signal may be input via a camera, and the environmental sensor signals include the signal input via one or more of an optical sensor, a temperature and humidity sensor, a poisonous gas sensor, a particulate pollution sensor, a touch module, a geo-location module and a gravity sensor.

At step 102, an intention of the user is determined according to the multimodal input signal.

At step 103, the intention of the user is processed to obtain a processing result, and the processing result is feedback to the user.

Specifically, feeding back the processing result to the user may include feeding back the processing result to the user by at least one of image, text-to-speech, robot body movements, and robot light feedback, which is not limited herein.

In an implementation of the present disclosure, determining the intention of the user according to the multimodal input signal may include: performing speech recognition on the speech signal, and determining the intention of the user according to the result of the speech recognition in combination with at least one of the image signal and the environmental sensor signals.

Alternatively, determining the intention of the user according to the multimodal input signal may include: performing the speech recognition on the speech signal, turning a display screen to a direction where the user is by sound source localization, recognizing personal information of the user via a camera in assistance with a face recognition function, and determining the intention of the user according to the result of the speech recognition, the personal information of the user and pre-stored preference information of the user. The personal information of the user includes a name, an age, and a sex of the user, etc. The preference information of the user includes daily behavior habits of the user, etc.

In an implementation of the present disclosure, processing the intention of the user and feeding back the processing result to the user may include: performing personalized data matching in a cloud database according to the intention of the user, obtaining recommended information suitable for the user, and outputting the recommended information suitable for the user to the user. The recommended information suitable for the user may be output to the user by playing, or the recommended information suitable for the user may be displayed on the screen in a form of text. In the present disclosure, there is no limit to the mode for outputting the recommended information to the user.

Further, the recommended information may include address information. Then, processing the intention of the user and feeding back the processing result to the user may include: obtaining a traffic route from a location where the user is to a location indicated by the address information, obtaining a travel mode suitable for the user according to a travel habit of the user, and recommending the travel mode to the user. The travel mode may be recommended to the user by playing, or the travel mode may be displayed on the display screen in a form of text. In the present disclosure, there is no limit to the mode for recommending the travel mode to the user.

In other words, with embodiments of the present disclosure, a function of communicating with a human via multiple rounds of dialogue can be realized, and a communication with a human via natural language and expressions can be realized. A personalized learning ability is provided, and relevant knowledge can be obtained by being connected to the intelligent cloud server and can be provided to the targeted user.

Scenario example: if an old man or woman wishes to go outside for participating in activities but does not know which activities are going on nearby, then according to the conventional solution, the old man or woman has to call his or her child for counsel or go to consult the neighbor or neighborhood committee.

However, with the method provided by embodiments of the present disclosure, the old man or woman can say "Hi, do you know which activities nearby are suitable for me to participate in" to a terminal device, such as an intelligent robot, which can realize the method provided by embodiments of the present disclosure.

The intelligent robot may turn the display screen thereof (for example, the face of the intelligent robot) to the direction where the old man or woman is by sound source localization, accurately recognize the personal information of the speaker (for example, the name, the age and the sex of the speaker) via the HD camera in assistance with the face recognition function, and determines the intention of the speech input by the speaker according to the information such as daily behavior habit, age and sex of the speaker, and then performs the personalized data matching in the cloud database according to the intention of the speech input, selects the recommended information most suitable for the speaker, and plays the recommended information to the speaker "I have already found an activity that you may like, an old man dance party will be held in Nanhu Park at two o'clock this afternoon, what do you think?", in which the recommended information includes the address information "Nanhu Park".

If the user answers "great, I like this activity, how could I go there", then after receiving the speech input by the user, the intelligent robot may perform the speech recognition on the speech input by the user, and determine, according to the result of the speech recognition, that the intention of the user is wishing to go to "Nanhu Park". Then, the intelligent robot will determine the location where the user is according to the signal input from the geo-location module, automatically search for the traffic route from the location where the user is to the Nanhu Park, intelligently obtain the travel mode suitable for the user according to the daily travel habit of the user, and recommend the travel mode to the user "Nanhu Park is 800m away from here, it will take you 15 minutes for walking from here to there, and the walking path has already been designed for you."

In another implementation, the intention of the user includes time information, and processing the intention of the user and feeding back the processing result to the user includes: setting alarm clock information according to the time information in the intention of the user, and feeding back the configuration to the user. The configuration may be feedback to the user by speech playing, or the configuration may be displayed to the user in the form of text. Certainly, other feedback modes may be used, which are not limited herein.

Further, after feeding back the configuration to the user, the user may be prompted, a message left by the user is recorded, and an alarm clock reminding is performed and the message left by the user is played when the time corresponding to the alarm clock information is reached.

Scenario example: at seven in the morning, a mother needs to go on a business trip, but her child DouDou is still in a deep sleep. Then, when leaving home, the mother may say to the intelligent robot "hi, please help me to wake up DouDou at eight, ok?" After receiving the speech, the intelligent robot determines, according to the result of the speech recognition, that the intention of the user includes time information, and then the intelligent robot sets the alarm clock information according to the time information included in the intention of the user, and feeds back the configuration to the user. After feeding back the configuration to the user, the intelligent robot may also prompt the user, for example, the intelligent robot answers "no problem, an alarm clock reminding has already been set, and DouDou will be woken up at eight after an hour. Would you like to leave a message to DouDou?"

The mother says "thank you, please tell DouDou, I have already prepared breakfast for her, and the breakfast is in the microwave oven. Today is her birthday, and happy birthday to her!" At this time, the intelligent robot records the message left by the user, and when the time corresponding to the above alarm clock information is reached, the alarm clock rings and the message left by the mother is played.

In yet another implementation of the present disclosure, before receiving the multimodal input signal, multimedia information sent by another user associated with the user may be received, and it may prompt the user whether to play the multimedia information. Herein, it may prompt the user whether to play the multimedia information by speech, text, or any other ways, as long as the function of prompting the user whether to play the multimedia information is realized.

If the intention of the user is agreeing to play the multimedia information, then processing the intention of the user may be playing the multimedia information sent by another user associated with the user.

Further, after play the multimedia information sent by another user associated with the user, a speech sent by the user may be received, and the speech may be sent to another user associated with the user. The speech may be sent to an application installed in the intelligent terminal used by another user associated with the user directly, or the speech may be converted to text first and then the text is sent to the application installed in the intelligent terminal used by another user associated with the user.

Scenario example: at 12 noon, DouDou is having lunch at home.

The intelligent robot receives the multimedia information (for example, video information) from another user (DouDou's mother) associated with the user (DouDou). Then, the intelligent robot prompts the user whether to play the multimedia information, for example, the intelligent robot plays "hi, DouDou, I received video information from your mother, would you like to watch it now?"

DouDou answers "please play it at once". After receiving the speech input by DouDou, the intelligent robot performs the speech recognition, and determines, according to the result of the speech recognition, that the intention of the user is agreeing to play the video information. Then, the video recorded by the mother in the city for business is automatically played on the screen of the intelligent robot.

After playing the video information sent by the mother, the intelligent robot may also receive the speech sent by DouDou "hi, please reply to my mother, thank you for her greetings, I love her, and wish her have a good trip and get home earlier!"

Then, the intelligent robot may automatically convert the reply from DouDou to text and send it to the application installed in the mother's mobile phone.

In still yet another implementation, the intention of the user may be requesting for playing the multimedia information, and then processing the intention of the user and feeding back the processing result to the user may include obtaining the multimedia information requested by the user from a cloud server via a wireless network, and playing the obtained multimedia information.

Further, before receiving the multimodal input signal, a call request sent by another user associated with the user may be received, and it may prompt the user whether to answer the call. If the intention of the user is answering the call, then processing the intention of the user and feeding back the processing result to the user may include: establishing a call connection between the user and another user associated with the user, and during the call, controlling a camera to identify a direction of a speaker in the user and another user associated with the user, and controlling the camera to turn to the direction of the speaker; starting a video-based face tracking function to make the camera track the face concerned by another user, after another user associated with the user clicks a concerned face via an application installed in a smart terminal used by another user.

Scenario example: at nine at night, DouDou is having a birthday party with her friends at home.

DouDou says to the intelligent robot "hi, today is my birthday, please play a Happy Birthday song for us!" After receiving the speech, the intelligent robot determines, according to the result of the speech recognition, that the intention of the speech input by DouDou is requesting for playing the multimedia information (for example, the audio information "Happy Birthday song").

Then, the intelligent robot searches for the Happy Birthday song from the cloud server via the wireless network (for example, Wireless Fidelity, WiFi for short), and downloads it to local for playing, and feeds back the processing result to the user "no problem, the song will be played at once".

After playing the song, the intelligent robot receives a video call request sent by DouDou's mother. Then, the intelligent robot prompts DouDou "one video call request is received, you mother requests for having a video call with you, would you like to answer the call?"

DouDou says "please answer at once." After receiving the speech from DouDou, the intelligent robot may determine that the intention of the speech input by DouDou is answering the call. Then, the intelligent robot connects the application installed in the intelligent terminal used by DouDou' mother who is on a business trip with the HD video camera of the intelligent robot, such that the mother may have a video call with DouDou and her friends. During the video call, the intelligent robot may control the camera of its own to automatically identity the direction of the speaker and control the camera to turn to the direction of the speaker. During turning the camera, an intelligent double-camera switching algorithm is used to ensure that the picture of the camera is stable and does not shake. The mother may also click a face in the video via the application installed in the intelligent terminal, and starts the video face track function, such that the camera of the intelligent robot always tracks the face concerned by the mother.

In other words, with the human-computer interactive method based on artificial intelligence, the user may contact family members anytime, a new intelligent interactive method is provided, and the terminal device achieving the above method can become a communication bridge between family members.

In still yet another implementation, the environmental sensor signals are configured to indicate the environment information of the environment. After receiving the multimodal input signal, if any of indexes included in the environment information exceeds a predetermined warning threshold, warn of danger is generated, a mode for processing the danger is outputted, and the camera is controlled to shoot. The predetermined warning thresholds are set respectively with respect to the indexes included in the environment information, which are not limited herein.

In other words, with the above human-computer interactive method based on artificial intelligence, it may protect family members from harm.

Scenario example: sensors, such as PM 2.5 particles sensor, poisonous gas sensor and/or temperature and humidity sensor, carried in the terminal device, such as the intelligent robot, applying the method provided by the present disclosure, may obtain the environment information of the environment where the intelligent robot is, such that the health degree of the home environment may be monitored in real time. When any of indexes included in the environment information exceeds the predetermined warning threshold, for example, when the leakage of poisonous gas (for example, coal gas) occurs at home, a warn of danger is generated at once (for example, through the voice alarm), the mode for processing the danger is presented, the family member is informed of the danger by automatically sending a message to the family member's mobile phone, the home puts on alert, and the camera is started to take video records of the whole house.

Further, if any of indexes included in the environment information reaches a state switching threshold, a state of a household appliance corresponding to the index reaching the state switching threshold is controlled via a smart home control platform, such that a management on household appliances can be realized. The state switching thresholds can be set respectively with respect to the indexes included in the environment information, which are not limited herein.

Scenario example: sensors, such as PM 2.5 particles sensor, poisonous gas sensor and/or temperature and humidity sensor, carried in the terminal device, such as the intelligent robot, applying the method provided by the present disclosure, may obtain the environment information of the environment where the intelligent robot is, such as the air quality, temperature and humidity in the house. When the water quality gets worse and reaches the state switching threshold of the water quality, the intelligent robot may automatically start the air cleaner via the Bluetooth smart home control platform. When the temperature is too high or too low and reaches the state switching threshold of the temperature, the air conditioner is automatically started. When family members leave home and forget to turn off lights, the lights will be automatically turned off if the state switching threshold of the light is reached.

In still yet another implementation, the intention of the user may be obtaining an answer to a question, and then processing the intention of the user and feeding back the processing result to the user may include: searching for the question included in the speech input by the user, obtaining the answer to the question, and outputting the answer to the user. The answer may be outputted to the user by playing, or the answer may be displayed to the user in the form of text.

Further, after outputting the answer to the user, recommended information related with the question included in the speech input by the user may be obtained, and the recommended information may be output to the user. The recommended information may be outputted to the user by playing, or the recommended information may be displayed to the user in the form of text.

Scenario example: children in the age of growth and learning are always curious of everything in the world, and they always ask their parents "what is this?" or "why is it?" In the case that there is no terminal device, such as intelligent robot, applied with the human-computer interactive method based on artificial intelligence provided by the present disclosure, the parents often cannot answer the questions due to their limited knowledge, or they have to turn on the computer for searching for the answers on the internet, which is time-consuming and inconvenient. However, if there is an accompanying intelligent robot, the children may directly ask the intelligent robot various questions anytime, such as "hi, why are the leaves green?" After receiving the speech input by the children, the intelligent robot may perform the speech recognition on the speech, and determine, according to the result of the speech recognition, that the intention of the speech input by the children is obtaining the answer to the question. Then, the intelligent robot may immediately search for the question included in the speech input by the children in the cloud, select the best result from the vast internet information, and play the answer to the children "the leaves are green because of chlorophyll, chlorophyll is an important green pigment present in chloroplasts of plant cells, which can make food for the plant by using water, air and sunshine. The chlorophyll is green, so the leaves are green."

After answering the children's question, the intelligent robot may also obtain recommended information related with the question included in the speech input by the children, and output the recommended information to the children. Specifically, the intelligent robot may automatically enlighten and educate the children according to the question asked by the children "Doudou, after learning the chlorophyll, do you know why the leaves wither in autumn?"

Other education scenarios may include helping children to learn Chinese characters and words, and telling stories to children, etc.

For the children who are about 3-5 years old and need to talk with people on and on, the intelligent robot may talk with the children without a break all day, which helps the growth of the children's language system. With the accompanying of the intelligent robot, the children education will go into a new age.

With the above human-computer interactive method based on artificial intelligence, after receiving the multimodal input signal, the intention of the user is determined according to the multimodal input signal, and then the intention of the user is processed and the processing result is feedback to the user. Thus, a good human-computer interactive effect is realized, a high functioning, high accompanying, and intelligent human-computer interaction is realized, and user experience is improved.

Fig. 2 is a block diagram of a human-computer interactive apparatus based on artificial intelligence according to an embodiment of the present disclosure. In embodiments of the present disclosure, the human-computer interactive apparatus based on artificial intelligence may be configured as a terminal device, or a part of the terminal device, which implements the method descried in Fig. 1. As shown in Fig. 2, the apparatus may include a receiving module 21, an intention determining module 22 and a processing module 23.

The receiving module 21 is configured to receive a multimodal input signal. The multimodal input signal includes at least one of a speech signal, an image signal and an environmental sensor signal.

Specifically, the speech signal may be input by the user via a microphone, the image signal may be input via a camera, and the environmental sensor signals include the signal input via one or more of an optical sensor, a temperature and humidity sensor, a poisonous gas sensor, a particulate pollution sensor, a touch module, a geo-location module and a gravity sensor.

The intention determining module 22 is configured to determine an intention of the user according to the multimodal input signal received by the receiving module 21.

The processing module is configured to process the intention of the user determined by the intention determining module 22 to obtain a processing result, and feed back the processing result to the user.

Specifically, the processing module may feedback the processing result to the user by at least one of image, text-to-speech, robot body movements, and robot light feedback, which is not limited herein.

In an implementation of the present disclosure, the intention determining module 22 is specifically configured to perform speech recognition on the speech signal input by the user to obtain a speech recognition result, and to determine the intention of the user according to a result of the speech recognition in combination with at least one of the image signal and the environmental sensor signals.

Alternatively, the intention determining module 22 is specifically configured to perform the speech recognition on the speech signal to obtain a speech recognition result, to turn a display screen to a direction where the user is by sound source localization, to identify personal information of the user via a camera in assistance with a face recognition function, and to determine the intention of the user according to the speech recognition result, the personal information of the user and pre-stored preference information of the user. The personal information of the user includes a name, an age, and a sex of the user, etc. The preference information of the user includes daily behavior habits of the user, etc.

In this implementation, the processing module 23 is configured to perform personalized data matching in a cloud database according to the intention of the user, to obtain recommended information suitable for the user, and to output the recommended information suitable for the user to the user. The processing module 23 may play the recommended information suitable for the user to the user, or display the recommended information suitable for the user on the screen in a form of text. In the present disclosure, there is no limit to the mode used by the processing module 23 for outputting the recommended information to the user.

Further, the recommended information may include address information. Then the processing module 23 is specifically configured to obtain a traffic route from a location where the user is to a location indicated by the address information, to obtain a travel mode suitable for the user according to a travel habit of the user, and to recommend the travel mode to the user. The processing module 23 may play the travel mode to the user by speech, or display the travel mode on the display screen in a form of text. In the present disclosure, there is no limit to the mode used by the processing module 23 for recommending the travel mode to the user.

In other words, with the human-computer interactive apparatus according to embodiments of the present disclosure, a function of communicating with a human via multiple rounds of dialogue can be realized, and a communication with a human via natural language and expressions can be realized. A personalized learning ability is provided, and relevant knowledge can be obtained by being connected to the intelligent cloud server and can be provided to the targeted user.

Scenario example: if an old man or woman wishes to go outside for participating in activities but does not know which activities are going on nearby, then according to the conventional solution, the old man or woman has to call his or her child for counsel or go to consult the neighbor or neighborhood committee.

However, with the human-computer interactive apparatus provided by embodiments of the present disclosure, the old man or woman can say "Hi, do you know which activities nearby are suitable for me to participate in" to the human-computer interactive apparatus provided by embodiments of the present disclosure.

After the receiving module 21 receives the above speech, The intention determining module 22 may turn the display screen (for example, the face of the intelligent robot) to the direction where the old man or woman is by sound source localization, accurately recognize the personal information of the speaker (for example, the name, the age and the sex of the speaker) via the HD camera in assistance with the face recognition function, and determine the intention of the speech input by the speaker according to the information such as daily behavior habit, age and sex of the speaker, and then the processing module 23 performs a personalized data matching in the cloud database according to the intention of the speech input, selects the recommended information most suitable for the speaker, and plays the recommended information to the speaker "I have already found an activity that you may like, an old man dance party will be held in Nanhu Park at two o'clock this afternoon, what do you think?", in which the recommended information includes the address information "Nanhu Park".

If the user answers "great, I like this activity, how could I go there", then after the receiving module 21 receives the speech input by the user, the intention determining module 22 may perform the speech recognition on the speech input by the user, and determine, according to the result of the speech recognition, that the intention of the user is wishing to go to "Nanhu Park". Then, the processing module 23 will determine the location where the user is according to the signal input from the geo-location module, automatically search for the traffic route from the location where the user is to the Nanhu Park, intelligently obtain the travel mode suitable for the user according to the daily travel habit of the user, and recommend the travel mode to the user "Nanhu Park is 800m away from here, it will take you 15 minutes for walking from here to there, and the walking path has already been designed for you."

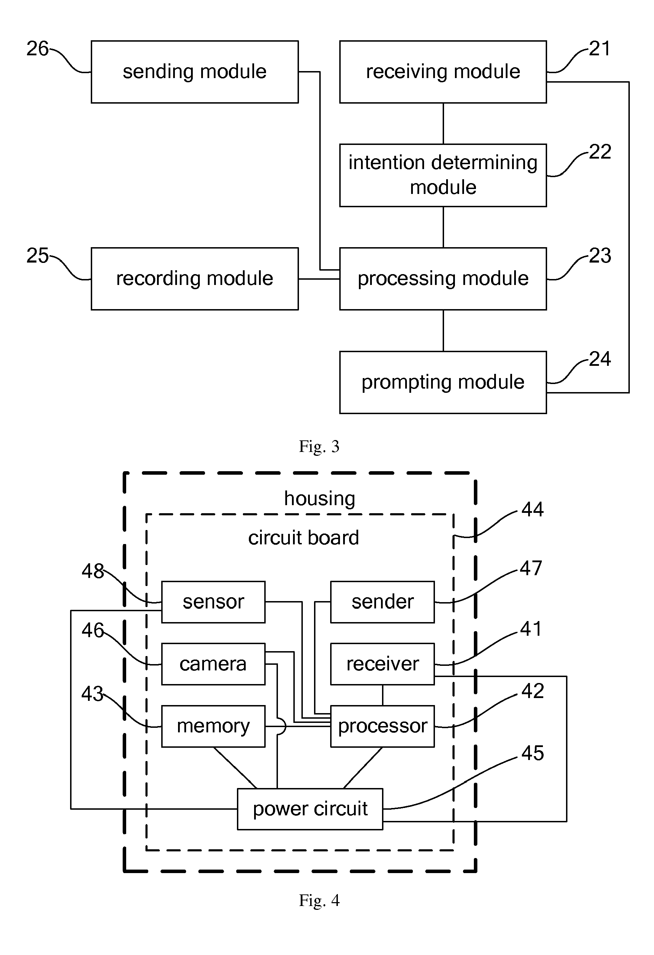

Fig. 3 is a block diagram of a man-man interactive apparatus according to another embodiment of the present disclosure. Compared with the human-computer interactive apparatus shown in Fig. 2, the human-computer interactive apparatus shown in Fig. 3 further include a prompting module 24 and a recording module 25.

In one implementation of the present embodiment, the intention of the user includes time information, and the processing module 23 is specifically configured to set alarm clock information according to the time information in the intention of the user, and to feed back the configuration to the user. The processing module 23 may play the configuration to the user by speech, or display the configuration to the user in the form of text. Certainly, other feedback modes may be used, which are not limited herein.

The prompting module 24 is configured to prompt the user after the processing module 23 feeds back the configuration to the user.

The recording module 25 is configured to record a message left by the user.

The prompt module 24 is further configured to perform an alarm clock reminding when the time corresponding to the alarm clock information is reached.

The processing module 23 is further configured to play the message left by the user and recorded b the recording module 25.

Scenario example: at seven in the morning, a mother needs to go on a business trip, but her child DouDou is still in a deep sleep. Then, when leaving home, the mother may say to the human-computer interactive apparatus "hi, please help me to wake up DouDou at eight, ok?" After the receiving module 21 receives the speech, the intention determining module 22 determines, according to the result of the speech recognition, that the intention of the user includes time information, and then the processing module 23 sets the alarm clock information according to the time information included in the intention of the user, and feeds back the configuration to the user. After the configuration is feedback to the user, the prompting module 24 may prompt the user, for example, answers "no problem, an alarm clock reminding has already been set, and DouDou will be woken up at eight after an hour. Would you like to leave a message to DouDou?"

The mother says "thank you, please tell DouDou, I have already prepared breakfast for her, and the breakfast is in the microwave oven. Today is her birthday, and happy birthday to her!" At this time, the recording module 25 records the message left by the user, and when the time corresponding to the above alarm clock information is reached, the alarm clock rings and the message left by the mother is played by the processing module 23.

In another implementation of the present embodiment, the receiving module 21 is further configured to receive multimedia information sent by another user associated with the user before receiving the multimodal input signal.

The prompting module 24 is configured to prompt the user whether to play the multimedia information. Herein, the prompting module 24 may prompt the user whether to play the multimedia information by speech, text, or any other ways, as long as the function of prompting the user whether to play the multimedia information is realized.

If the intention of the user is agreeing to play the multimedia information, then the processing module 23 is configured to play the multimedia information sent by another user associated with the user.

Further, the human-computer interactive apparatus may further include a sending module 26.

The receiving module 21 is further configured to receive a speech sent by the user after the processing module 23 plays the multimedia information sent by another user associated with the user.

The sending module 26 is configured to send the speech received by the receiving module 21 to another user associated with the user. The sending module 26 may directly send the speech to an application installed in the intelligent terminal used by another user associated with the user, or may convert the speech to text first and then send the text to the application installed in the intelligent terminal used by another user associated with the user.

Scenario example: at 12 noon, DouDou is having lunch at home.

The receiving module 21 receives the multimedia information (for example, video information) from another user (DouDou's mother) associated with the user (DouDou). Then, the prompting module 24 prompts the user whether to play the multimedia information, for example, plays "hi, DouDou, I received one video information from your mother, would you like to watch it now?"

DouDou answers "please play it at once". After the receiving module 21 receives the speech input by DouDou, the intention determining module 22 performs the speech recognition, and determines, according to the result of the speech recognition, that the intention of the user is agreeing to play the video information. Then, the processing module 23 plays the video recorded by the mother in the city for business on the display screen.

After the video information sent by the mother is played, the receiving module 21 may also receive the speech sent by DouDou "hi, please reply to my mother, thank you for her greetings, I love her, and wish her have a good trip and get home earlier!"

Then, the sending module 26 may automatically convert the reply from DouDou to text and send it to the application installed in the mother's mobile phone.

In yet another implementation of the present embodiment, the intention of the user may be requesting for playing the multimedia information, and the processing module 23 is specifically configured to obtain the multimedia requested by the user from a cloud server via a wireless network, and to play the obtained multimedia information.

Further, the receiving module 21 is further configured to receive a call request sent by another user associated with the user before receiving the multimodal input signal.

The prompting module 24 is configured to prompt the user whether to answer the call.

If the intention of the user is answering the call, then the processing module 23 is specifically configured to: establish a call connection between the user and another user associated with the user; during the call, control a camera to identify a direction of a speaker in the user and another user associated with the user, and control the camera to turn to the direction of the speaker; start a video-based face tracking function to make the camera track the face concerned by another user, after another user associated with the user clicks a concerned face via an application installed in a smart terminal used by another user.

Scenario example: at nine at night, DouDou is having a birthday party with her friends at home.

DouDou says to the intelligent robot "hi, today is my birthday, please play a Happy Birthday song for us!" After the receiving module 21 receives the speech, the intention determining module 22 determines, according to the result of the speech recognition, that the intention of the speech input by DouDou is requesting for playing the multimedia information (for example, the audio information "Happy Birthday song").

Then, the processing module 23 searches for the Happy Birthday song from the cloud server via WiFi, and downloads it to local for playing, and feeds back the processing result to the user "no problem, the song will be played at once".

After the song is played, the receiving module 21 receives a video call request sent by DouDou's mother. Then, the prompting module 24 prompts DouDou "one video call request is received, you mother requests for having a video call with you, would you like to answer the call?"

DouDou says "please answer at once." After the receiving module 21 receives the speech from DouDou, the intention determining module 22 may determine that the intention of the speech input by DouDou is answering the call. Then, the processing module 23 connects the application installed in the intelligent terminal used by DouDou' mother who is on a business trip with the HD video camera of the intelligent robot, such that the mother may have a video call with DouDou and her friends. During the video call, the processing module 23 may control the camera of its own to automatically identity the direction of the speaker and control the camera to turn to the direction of the speaker. During turning the camera, an intelligent double-camera switching algorithm is used to ensure that the picture of the camera is stable and does not shake. The mother may also click a face in the video via the application installed in the intelligent terminal, and starts the video face track function, such that the camera of the intelligent robot always tracks the face concerned by the mother.

In other words, with the human-computer interactive apparatus based on artificial intelligence, the user may contact family members anytime, a new intelligent interactive method is provided, and the terminal device achieving the above method can become a communication bridge between family members.

In still yet another implementation of the present embodiment, the environmental sensor signals are configured to indicate the environment information of the environment.

The processing module 23 is further configured to generate a warn of danger, to output a mode for processing the danger, and to control the camera to shoot, if any of indexes included in the environment information exceeds a predetermined warning threshold. The predetermined warning thresholds are set respectively with respect to the indexes included in the environment information, which are not limited herein.

In other words, with the above human-computer interactive apparatus, it may protect family members from harm.

Scenario example: sensors in the human-computer interactive apparatus may include a PM 2.5 particles sensor, a poisonous gas sensor and/or a temperature and humidity sensor. The signals of the above sensors are used to indicate the environment information of the environment where the intelligent robot is, such that the health degree of the home environment may be monitored in real time. When any of indexes included in the environment information exceeds the predetermined warning threshold, for example, when the leakage of poisonous gas (for example, coal gas) occurs at home, a warn of danger is generated by the processing module 23 at once (for example, through the voice alarm), the mode for processing the danger is presented, the family member is informed of the danger by automatically sending a message to the family member's mobile phone, the home puts on alert, and the camera is started to take video records of the whole house.

Further, if any of indexes included in the environment information reaches a state switching threshold, the processing module 23 is further configured to control via a smart home control platform, a state of a household appliance corresponding to the index reaching the state switching threshold, such that a management on household appliances can be realized. The state switching thresholds can be set respectively with respect to the indexes included in the environment information, which are not limited herein.

Scenario example: sensors in the above human-computer interactive apparatus may include a PM 2.5 particles sensor, a poisonous gas sensor and/or a temperature and humidity sensor. The signals of the above sensors may be used to indicate the environment information of the environment where the apparatus is, such as the air quality, temperature and humidity in the house. When the water quality gets worse and reaches the state switching threshold of the water quality, the processing module 23 may automatically start the air cleaner via the Bluetooth smart home control platform. When the temperature is too high or too low and reaches the state switching threshold of the temperature, the processing module 23 will automatically start the air conditioner. When family members leave home and forget to turn off lights, the processing module 23 may automatically turn off the lights if the state switching threshold of the light is reached.

In still yet another implementation, the intention of the user may be obtaining an answer to a question, and then the processing module 23 is further configured to search for the question included in the speech input by the user, obtain the answer to the question, and output the answer to the user. The processing module 23 may play the answer to the user by speech, or display the answer to the user in the form of text.

Further, after outputting the answer to the user, the processing module 23 is further configured to obtain recommended information related with the question included in the speech input by the user and to output the recommended information to the user. The processing module 23 may play the recommended information to the user by speech, or may display the recommended information to the user in the form of text.

Scenario example: children in the age of growth and learning are always curious of everything in the world, and they always ask their parents "what is this?" or "why is it?" In the case that there is no human-computer interactive apparatus provided by the present disclosure, the parents often cannot answer the questions due to their limited knowledge, or they have to turn on the computer for searching for the answers on the internet, which is time-consuming and inconvenient. However, if there is a human-computer interactive apparatus provided by the present disclosure, the children may directly ask the human-computer interactive apparatus various questions anytime, such as "hi, why are the leaves green?" After the receiving module 21 receives the speech input by the children, the intention determining module 22 may perform the speech recognition on the speech, and determine, according to the result of the speech recognition, that the intention of the speech input by the children is obtaining the answer to the question. Then, the processing module 23 may immediately search for the question included in the speech input by the children in the cloud, select the best result from the vast internet information, and play the answer to the children "the leaves are green because of chlorophyll, chlorophyll is an important green pigment present in chloroplasts of plant cells, which can make food for the plant by using water, air and sunshine. The chlorophyll is green, so the leaves are green."

After answering the children's question, the processing module 23 may also obtain recommended information related with the question included in the speech input by the children, and output the recommended information to the children. Specifically, the processing module 23 may automatically enlighten and educate the children according to the question asked by the children "Doudou, after learning the chlorophyll, do you know why the leaves wither in autumn?"

Other education scenarios may include helping children to learn Chinese characters and words, and telling stories to children, etc.

For the children who are about 3-5 years old and need to talk with people on and on, the intelligent robot may talk with the children without a break all day, which helps the growth of the children's language system. With the accompanying of the intelligent robot, the children education will go into a new age.

With the above human-computer interactive apparatus based on artificial intelligence, after the receiving module 21 receives the multimodal input signal, the intention determining module 22 determines the intention of the user according to the multimodal input signal, and then the processing module processes the intention of the user and feedback the processing result to the user. Thus, a good human-computer interactive effect is realized, a high functioning, high accompanying, and intelligent human-computer interaction is realized, and user experience is improved.

Fig. 4 is a block diagram of a terminal device according to an embodiment of the present disclosure, which may realize the process shown in the embodiment of Fig. 1. As shown in Fig. 4, the terminal device may include a receiver 41, a processor 42, a memory 43, a circuit board 44 and a power circuit 45. The circuit board 44 is arranged inside a space enclosed by a housing, the processor 42 and the memory 43 are arranged on the circuit board 44, the power circuit 45 is configured to supply power for each circuit or component of the terminal device, and the memory 43 is configured to store executable program codes.

The receiver 41 is configured to receive a multimodal input signal, the multimodal input signal including at least one of a speech signal input by a user, an image signals and an environmental sensor signal.

Specifically, the speech signal may be input by the user via a microphone, the image signal may be input via a camera, and the environmental sensor signals include the signal input via one or more of an optical sensor, a temperature and humidity sensor, a poisonous gas sensor, a particulate pollution sensor, a touch module, a geo-location module and a gravity sensor.

The processor 42 is configured to run a program corresponding to the executable program codes by reading the executable program codes stored in the memory, so as to execute following steps: determining an intention of the user according to the multimodal input signal; processing the intention of the user to obtain a processing result, and feeding back the processing result to the user.

Specifically, the processor 42 may feedback the processing result to the user by at least one of image, text-to-speech, robot body movements, and robot light feedback, which is not limited herein.

In an implementation of the present embodiment, the processor 42 is specifically configured to perform speech recognition on the speech signal, and to determine the intention of the user according to the result of the speech recognition in combination with at least one of the image signal and the environmental sensor signals.

Alternatively, the terminal device may further include a camera 46. The processor 42 is specifically configured to perform the speech recognition on the speech signal input by the user, to turn a display screen to a direction where the user is by sound source localization, to recognize personal information of the user via the camera 46 in assistance with a face recognition function, and to determine the intention of the user according to the result of the speech recognition, the personal information of the user and pre-stored preference information of the user. The personal information of the user includes a name, an age, and a sex of the user, etc. The preference information of the user includes daily behavior habits of the user, etc.

In the implementation, the processor 42 is specifically configured to perform personalized data matching in a cloud database according to the intention of the user, to obtain recommended information suitable for the user, and to output the recommended information suitable for the user to the user. The processor 42 may play the recommended information suitable for the user to the user by speech, or display the recommended information suitable for the user on the display screen in a form of text. In the present disclosure, there is no limit to the mode for outputting the recommended information to the user.

Further, the recommended information may include address information. The processor 42 is specifically configured to obtain a traffic route from a location where the user is to a location indicated by the address information, to obtain a travel mode suitable for the user according to a travel habit of the user, and to recommend the travel mode to the user. The processor 42 may play the travel mode to the user by speech or may display the travel mode on the screen in the form of text. In the present disclosure, there is no limit to the mode for recommending the travel mode to the user.

In other words, with the terminal device according to embodiments of the present disclosure, a function of communicating with a human via multiple rounds of dialogue can be realized, and a communication with a human via natural language and expressions can be realized. A personalized learning ability is provided, and relevant knowledge can be obtained by being connected to the intelligent cloud server and can be provided to the targeted user.

Scenario example: if an old man or woman wishes to go outside for participating in activities but does not know which activities are going on nearby, then according to the conventional solution, the old man or woman has to call his or her child for counsel or go to consult the neighbor or neighborhood committee.

However, with the terminal device provided by embodiments of the present disclosure, the old man or woman can say "Hi, do you know which activities nearby are suitable for me to participate in" to the terminal device.

After the receiver 41 receives the speech, the processor 42 may turn the display screen (for example, the face of the intelligent robot) to the direction where the old man or woman is by sound source localization, accurately recognize the personal information of the speaker (for example, the name, the age and the sex of the speaker) via the HD camera 46 in assistance with the face recognition function, and determine the intention of the speech input by the speaker according to the information such as daily behavior habit, age and sex of the speaker, and then perform a personalized data matching in the cloud database according to the intention of the speech input, select the recommended information most suitable for the speaker, and play the recommended information to the speaker "I have already found an activity that you may like, an old man dance party will be held in Nanhu Park at two o'clock this afternoon, what do you think?", in which the recommended information includes the address information "Nanhu Park".

If the user answers "great, I like this activity, how could I go there", then after the receiver 41 receives the speech input by the user, the processor 42 may perform the speech recognition on the speech input by the user, and determine, according to the result of the speech recognition, that the intention of the user is wishing to go to "Nanhu Park". Then, the processor 42 will determine the location where the user is according to the signal input from the geo-location module, automatically search for the traffic route from the location where the user is to the Nanhu Park, intelligently obtain the travel mode suitable for the user according to the daily travel habit of the user, and recommend the travel mode to the user "Nanhu Park is 800m away from here, it will take you 15 minutes for walking from here to there, and the walking path has already been designed for you."

In another implementation of the present embodiment, the intention of the user includes time information, and the processor 42 is specifically configured to set alarm clock information according to the time information in the intention of the user, and to feedback the configuration to the user. The processor 42 may play the configuration to the user by speech, or may display the configuration to the user in the form of text. Certainly, other feedback modes may be used, which are not limited herein.

Further, after feeding back the configuration to the user, the processor 42 is further configured to prompt the user, to record a message left by the user, and to perform an alarm clock reminding and to play the message left by the user when the time corresponding to the alarm clock information is reached.

Scenario example: at seven in the morning, a mother needs to go on a business trip, but her child DouDou is still in a deep sleep. Then, when leaving home, the mother may say to the terminal device "hi, please help me to wake up DouDou at eight, ok?" After the receiver 41 receives the speech, the processor 42 determines, according to the result of the speech recognition, that the intention of the user includes time information, and then the processor 42 sets the alarm clock information according to the time information included in the intention of the user, and feeds back the configuration to the user. After feeding back the configuration to the user, the processor 42 may also prompt the user, for example, answers "no problem, an alarm clock reminding has already been set, and DouDou will be woken up at eight after an hour. Would you like to leave a message to DouDou?"

The mother says "thank you, please tell DouDou, I have already prepared breakfast for her, and the breakfast is in the microwave oven. Today is her birthday, and happy birthday to her!" At this time, the processor 42 records the message left by the user, and when the time corresponding to the above alarm clock information is reached, the alarm clock rings and the message left by the mother is played.

In yet another implementation of the present embodiment, the receiver 41 is further configured to receive multimedia information sent by another user associated with the user before receiving the multimodal input signal.

The processor 42 is further configured to prompt the user whether to display the multimedia information. Herein, the processor 42 may prompt the user whether to play the multimedia information by speech, text, or any other ways, as long as the function of prompting the user whether to play the multimedia information is realized.

If the intention of the user is agreeing to play the multimedia information, then the processor 42 is specifically configured to play the multimedia information sent by another user associated with the user.

Further, the terminal device may further include a sender 47.

The receiver 41 is further configured to receive a speech sent by the user after the processor plays the multimedia information sent by another user associated with the user.

The sender 47 is configured to send the speech to another user associated with the user. The sender 47 may directly send the speech to an application installed in the intelligent terminal used by another user associated with the user, or may convert the speech to text first and then send the text to the application installed in the intelligent terminal used by another user associated with the user.

Scenario example: at 12 noon, DouDou is having lunch at home.

The receiver 41 receives the multimedia information (for example, video information) from another user (DouDou's mother) associated with the user (DouDou). Then, the processor 42 prompts the user whether to play the multimedia information, for example, plays "hi, DouDou, I received one video information from your mother, would you like to watch it now?"

DouDou answers "please play it at once". After the receiver 41 receives the speech input by DouDou, the processor 42 performs the speech recognition, and determines, according to the result of the speech recognition, that the intention of the user is agreeing to play the video information. Then, the processor 42 automatically plays the video recorded by the mother in the city for business on the display screen.

After the video information sent by the mother is played, the receiver 41 may also receive the speech sent by DouDou "hi, please reply to my mother, thank you for her greetings, I love her, and wish her have a good trip and get home earlier!"

Then, the sender may automatically convert the reply speech from DouDou to text and send it to the application installed in the mother's mobile phone.

In still yet another implementation of the present embodiment, the intention of the user may be requesting for playing the multimedia information, and then the processor 42 is specifically configured to obtain the multimedia information requested by the user from a cloud server via a wireless network, and to play the obtained multimedia information.

Further, the receiver 41 is further configured to receive a call request sent by another user associated with the user before receiving the multimodal input signal.

The processor 42 is further configured to prompt the user whether to answer the call.

If the intention of the user is answering the call, then the processor 42 is specifically configured to: establish a call connection between the user and another user associated with the user; during the call, control a camera to identify a direction of a speaker in the user and another user associated with the user, and control the camera to turn to the direction of the speaker; start a video-based face tracking function to make the camera track the face concerned by another user, after another user associated with the user clicks a concerned face via an application installed in a smart terminal used by another user.

Scenario example: at nine at night, DouDou is having a birthday party with her friends at home.

DouDou says to the terminal device "hi, today is my birthday, please play a Happy Birthday song for us!" After the receiver 41 receives the speech, the processor 42 determines, according to the result of the speech recognition, that the intention of the speech input by DouDou is requesting for playing the multimedia information (for example, the audio information "Happy Birthday song").

Then, the processor 42 searches for the Happy Birthday song from the cloud server via WiFi, and downloads it to local for playing, and feeds back the processing result to the user "no problem, the song will be played at once".

After the song is played, the receiver 41 receives a video call request sent by DouDou's mother. Then, the processor 42 prompts DouDou "one video call request is received, you mother requests for having a video call with you, would you like to answer the call?"

DouDou says "please answer at once." After the receiver 41 receives the speech from DouDou, the processor 42 may determine that the intention of the speech input by DouDou is answering the call. Then, the processor 42 connects the application installed in the intelligent terminal used by DouDou' mother who is on a business trip with the HD video camera of the intelligent robot, such that the mother may have a video call with DouDou and her friends. During the video call, the processor 42 may control the camera 46 to automatically identity the direction of the speaker and control the camera 46 to turn to the direction of the speaker. During turning the camera 46, an intelligent double-camera switching algorithm is used to ensure that the picture of the camera is stable and does not shake. The mother may also click a face in the video via the application installed in the intelligent terminal, and starts the video face track function, such that the camera 46 always tracks the face concerned by the mother.

In other words, with the terminal device provided by embodiments of the present disclosure, the user may contact family members anytime, a new intelligent interactive method is provided, and the terminal device achieving the above method can become a communication bridge between family members.

In still yet another implementation of the present embodiment, the terminal device may further include sensors 48. The environmental sensor signals obtained by the sensors 48 are used to indicate the environment information of the environment where the terminal device is.

The processor 42 is further configured to generate a warn of danger, to output a mode for processing the danger, and to control the camera to shoot, if any of indexes included in the environment information exceeds a predetermined warning threshold.

In other words, with the above terminal device, it may protect family members from harm.

Scenario example: sensors 48 may include a PM 2.5 particles sensor, a poisonous gas sensor and/or a temperature and humidity sensor, and the environmental sensor signals obtained by the sensors 48 are used to indicate the environment information of the environment where the terminal device is, such that the health degree of the home environment may be monitored in real time. When any of indexes included in the environment information exceeds the predetermined warning threshold, for example, when the leakage of poisonous gas (for example, coal gas) occurs at home, the processor 42 generates a warn of danger at once (for example, through the voice alarm), outputs the mode for processing the danger, informs the family member of the danger by automatically sending a message to the family member's mobile phone, the home puts on alert, and the camera is started to take video records of the whole house.

Further, if any of indexes included in the environment information reaches a state switching threshold, the processor 42 may control a state of a household appliance corresponding to the index reaching the state switching threshold via a smart home control platform, such that a management on household appliances can be realized. The state switching thresholds can be set respectively with respect to the indexes included in the environment information, which are not limited herein.

Scenario example: sensors 48 may include a PM 2.5 particles sensor, a poisonous gas sensor and/or a temperature and humidity sensor, and the environmental sensor signals obtained by the sensors may be used to indicate the environment information of the environment where the terminal device is, such as the air quality, temperature and humidity in the house. When the water quality gets worse and reaches the state switching threshold of the water quality, the processor 42 may automatically start the air cleaner via the Bluetooth smart home control platform. When the temperature is too high or too low and reaches the state switching threshold of the temperature, the processor may automatically start the air conditioner. When family members leave home and forget to turn off lights, the processor 42 will automatically turn off the lights if the state switching threshold of the light is reached.

In still yet another embodiment of the present disclosure, the intention of the user may be obtaining an answer to a question, and the processor 42 is specifically configured to search for the question included in the speech input by the user, obtain the answer to the question, and output the answer to the user. The processor 42 may play the answer to the user by speech, or display the answer to the user in the form of text.

Further, after outputting the answer to the user, the processor 42 is further configured to obtain recommended information related with the question included in the speech input by the user and to output the recommended information to the user. The processor 42 may play the recommended information to the user by speech, or may display the recommended information to the user in the form of text.

Scenario example: children in the age of growth and learning are always curious of everything in the world, and they always ask their parents "what is this?" or "why is it?" In the case that there is no terminal device provided by embodiments of the present disclosure, the parents often cannot answer the questions due to their limited knowledge, or they have to turn on the computer for searching for the answers on the internet, which is time-consuming and inconvenient. However, if there is an accompanying of the above terminal device, the children may directly ask the terminal device various questions anytime, such as "hi, why are the leaves green?" After the receiver 41 receives the speech input by the children, the processor 42 may perform the speech recognition on the speech, and determine, according to the result of the speech recognition, that the intention of the speech input by the children is obtaining the answer to the question. Then, the processor 42 may immediately search for the question included in the speech input by the children in the cloud, select the best result from the vast internet information, and play the answer to the children "the leaves are green because of chlorophyll, chlorophyll is an important green pigment present in chloroplasts of plant cells, which can make food for the plant by using water, air and sunshine. The chlorophyll is green, so the leaves are green."

After answering the children's question, the processor 42 may also obtain recommended information related with the question included in the speech input by the children, and output the recommended information to the children. Specifically, the processor 42 may automatically enlighten and educate the children according to the question asked by the children "Doudou, after learning the chlorophyll, do you know why the leaves wither in autumn?"

Other education scenarios may include helping children to learn Chinese characters and words, and telling stories to children, etc.

For the children who are about 3-5 years old and need to talk with people on and on, the intelligent robot may talk with the children without a break all day, which helps the growth of the children's language system. With the accompanying of the intelligent robot, the children education will go into a new age.

With the above terminal device, after the receiver 41 receives the multimodal input signal, the processor 42 determines the intention of the user according to the multimodal input signal, and then processes the intention of the user and feeds back the processing result to the user. Thus, a good human-computer interactive effect is realized, a high functioning, high accompanying, and intelligent human-computer interaction is realized, and user experience is improved.

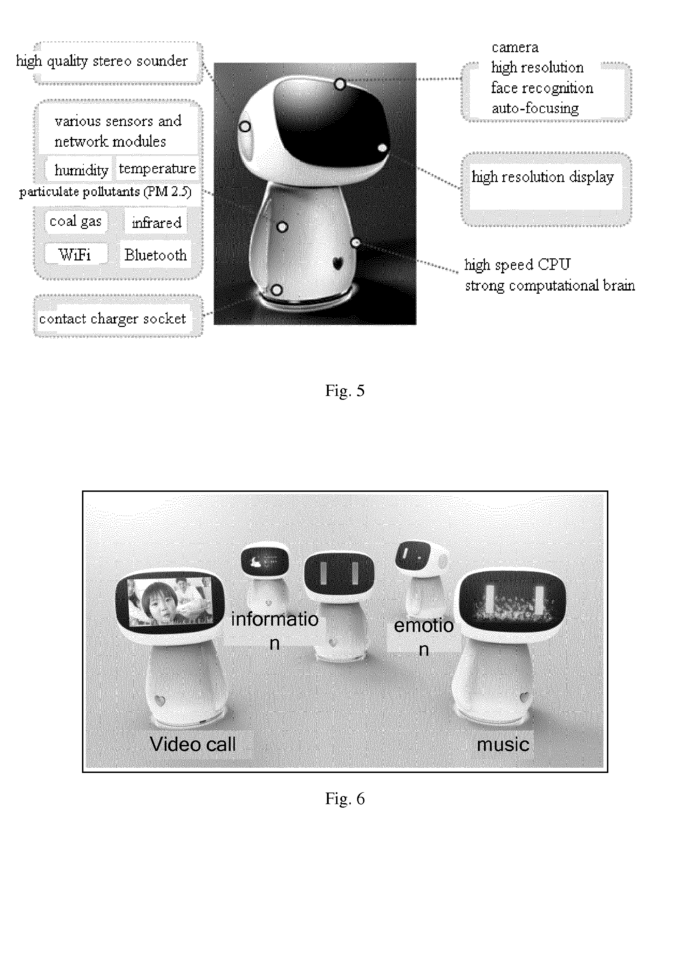

The terminal device shown in Fig. 4 may be an intelligent robot. Fig. 5 is a schematic diagram of an intelligent robot according to an embodiment of the present disclosure, which may be a desktop robot product having a 3-degree of freedom (the body may rotate horizontally in 360 degrees, the head may rotate horizontally in 180 degrees, and the head may pitch between positive 60 degree and negative 60 degree, the robot may walk or may not walk). As shown in Fig. 5, the intelligent robot is provided with a high quality stereo sounder, a camera (with a high resolution, capable of realizing face recognition and automatic focusing), a high resolution display, a central processing unit (CPU for short hereinafter) and a contact charger socket, and integrated with various sensors and network modules. The sensors carried in the intelligent robot may include a humidity sensor, a temperature sensor, a PM 2.5 particles sensor, a poisonous gas sensor (for example, a coal gas sensor), etc. The network modules may include an infrared module, a WIFI module, a Bluetooth module, etc.

In addition, the above intelligent robot has a new multimodal information interaction (vision, audition, touch, smell and/or natural language communication and feedback). The intelligent robot serves in the home environment, and acts as an intelligent bridge among family users, intelligent devices, information and services. The main functions of the intelligent robot may satisfy the requirements such as communication, emotion accompanying, monitoring, information providing, helping and education in the home. Fig. 6 is a schematic diagram illustrating an interaction via a screen of an intelligent robot according to an embodiment of the present disclosure. As shown in Fig. 6, the intelligent robot may perform multimodal information interaction, such as a video call, an emotion communication, an information transfer, and/or a multimedia playing (for example, music play).

Moreover, the intelligent robot has a matched application, which can supply a remote communication and a video contact away from home.

The intelligent robot in the present disclosure has an open system platform, which can be updated continuously. The intelligent robot is matched with an open operating system platform. With the open interface protocol, various content providers may develop all kinds of content and applications for the intelligent robot. In the software aspect, by connecting to the network via WiFi, the intelligent robot may update the software of itself continuously, the cloud system may also obtain the huge amount of new information in the internet without a break all day, such that the user no longer needs to perform the complicated updating operation, which may be completed in the background the intelligent robot silently.

It should be noted that, in the description of the present disclosure, terms such as "first" and "second" are used herein for purposes of description and are not intended to indicate or imply relative importance or significance. Furthermore, in the description of the present disclosure, "a plurality of" refers to two or more unless otherwise specified.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, in which the functions may be executed in other orders instead of the order illustrated or discussed, including in a basically simultaneous manner or in a reverse order, which should be understood by those skilled in the art.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs include one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks or CD, etc.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from scope of the present disclosure.

## Claims

1. A human-computer interactive method based on artificial intelligence, comprising:
receiving a multimodal input signal, the multimodal input signal comprising at least one of a speech signal, an image signal and an environmental sensor signal (101);
determining an intention of a user according to the multimodal input signal (102);
processing the intention of the user to obtain a processing result, and feeding back the processing result to the user (103).

2. The method according to claim 1, wherein
determining an intention of a user according to the multimodal input signal (102) comprises:
performing speech recognition on the speech signal to obtain a speech recognition result, and determining the intention of the user according to the speech recognition result in combination with at least one of the image signal and the environmental sensor signals; or
determining an intention of a user according to the multimodal input signal (102) comprises:
performing speech recognition on the speech signal to obtain a speech recognition result, turning a display screen to a direction where the user is by sound source localization, and identifying personal information of the user via a camera in assistance with a face recognition function, determining the intention of the user according to the speech recognition result, the personal information of the user and pre-stored preference information of the user.

3. The method according to claim 1 or 2, wherein
processing the intention of the user to obtain a processing result and feeding back the processing result to the user (103) comprises:
performing personalized data matching in a cloud database according to the intention of the user, obtaining recommended information suitable for the user, and outputting the recommend information to the user;
further wherein the recommended information comprises address information, and processing the intention of the user to obtain a processing result and feeding back the processing result to the user (103) comprises:
obtaining a traffic route from a location where the user is to a location indicated by the address information, obtaining a travel mode suitable for the user according to a travel habit of the user, and recommending the travel mode to the user.

4. The method according to any one of claims 1-3,
wherein the intention of the user comprises time information, and processing the intention of the user to obtain a processing result and feeding back the processing result to the user (103) comprises:
setting alarm clock information according to the time information in the intention of the user, and feeding back the configuration to the user;
wherein, after feeding back the configuration to the user, the method further comprises:
prompting the user, recording a message left by the user; and
performing an alarm clock reminding and play the message left by the user, when the time corresponding to the alarm clock information is reached.

5. The method according to any one of claims 1-4,
before receiving the multimodal input signal, the method further comprises:
receiving multimedia information sent by another user associated with the user, and prompting the user whether to play the multimedia information,
wherein the intention of the user is agreeing to play the multimedia information, processing the intention of the user (103) comprises playing the multimedia information sent by another user associated with the user,
wherein after playing the multimedia information sent by another user associated with the user, the method further comprises:
receiving a speech sent by the user, and sending the speech to another user associated with the user; or
wherein the intention of the user is requesting for playing multimedia information,
processing the intention of the user to obtain a processing result and feeding back the processing result to the user (103) comprises: obtaining the multimedia information requested by the user from a cloud server via a wireless network, and playing the multimedia information; or
before receiving the multimodal input signal, the method further comprises: receiving a call request sent by another user associated with the user, and prompting the user whether to answer the call,
wherein the intention of the user is answering the call, processing the intention of the user to obtain a processing result and feeding back the processing result to the user (103) comprises:
establishing a call connection between the user and another user associated with the user, and during the call, controlling a camera to identify a direction of a speaker, and controlling the camera to turn to the direction of the speaker, starting a video-based face tracking function to make the camera track the face concerned by another user, after another user associated with the user clicks a concerned face via an application installed in a smart terminal used by another user.

6. The method according to any one of claims 1-5, wherein
the environmental sensor signals are configured to indicate environment information of the environment,
after receiving the multimodal input signal, the method further comprises:
warning of a danger, outputting modes for processing the danger, and controlling a camera to shoot, if any of indexes in the environment information exceeds a predetermined warning threshold,
after receiving the multimodal input signal, the method further comprises:
if any of the indexes in the environment information reaches a state switching threshold, controlling by an smart home control platform, a state of a household appliance corresponding to the index reaching the state switching threshold.

7. The method according to any one of claims 1-6, wherein the intention of the user is obtaining an answer to a question,
processing the intention of the user to obtain a processing result and feeding back the processing result to the user (103) comprises:
searching for the question included in a speech input by the user, obtaining the answer to the question, and outputting the answer to the user,
after outputting the answer to the user, the method further comprises:
obtaining recommended information associated with the question included in the speech input by the user, and outputting the recommended information to the user.

8. A terminal device, comprising a receiver (41), a processor (42), a memory (43), a circuit board (44) and a power circuit (45), wherein the circuit board (44) is arranged inside a space enclosed by a housing, the processor (42) and the memory (43) are arranged on the circuit board (44), the power circuit (45) is configured to supply power for each circuit or component of the terminal device, the memory (43) is configured to store executable program codes;
the receiver (41) is configured to receive a multimodal input signal, the multimodal input signal comprising at least one of a speech signal, an image signal and an environmental sensor signal;
the processor (42) is configured to run a program corresponding to the executable program codes by reading the executable program codes stored in the memory, so as to execute following steps:
determining an intention of a user according to the multimodal input signal;
processing the intention of the user to obtain a processing result, and feeding back the processing result to the user.

9. The terminal device according to claim 8, wherein
the processor (42) is configured to perform speech recognition on the speech signal to obtain a speech recognition result, and to determine the intention of the user according to the speech recognition result in combination with at least one of the image signal and the environmental sensor signals; or
the terminal device further comprise a camera (46),
the processor (42) is configured to perform speech recognition on the speech signal to obtain a speech recognition result, to turn a display screen to a direction where the user is by sound source localization, to identify personal information of the user via the camera (46) in assistance with a face recognition function, and to determine the intention of the user according to the speech recognition result, the personal information of the user and pre-stored preference information of the user.

10. The terminal device according to claim 8 or 9, wherein
the processor (42) is configured to perform personalized data matching in a cloud database according to the intention of the user, to obtain recommended information suitable for the user, and to output the recommend information to the user;
wherein the recommended information comprises address information, and the processor (42) is configured to obtain a traffic route from a location where the user is to a location indicated by the address information, to obtain a travel mode suitable for the user according to a travel habit of the user, and to recommend the traffic mode to the user.

11. The terminal device according to any one of claims 8-10,
wherein the intention of the user comprises time information, and the processor (42) is configured to set alarm clock information according to the time information in the intention of the user, and to feed back the configuration to the user;
wherein the processor (42) is further configured to prompt the user after feeding back the configuration to the user, to record a message left by the user, to perform an alarm clock reminding and to play the message left by the user when the time corresponding to the alarm clock information is reached.

12. The terminal device according to any one of claims 8-11, wherein
the receiver (41) is further configured to receive multimedia information sent by another user associated with the user before receiving the multimodal input information,
the processor (42) is further configured to prompt the user whether to play the multimedia information,
wherein the intention of the user is agreeing to play the multimedia information, and the processor (42) is configured to play the multimedia information sent by another user associated with the user,
wherein the terminal device further comprises a sender (47);
the receiver (41) is further configured to receive a speech sent by the user after the processor (42) plays the multimedia information sent by another user associated with the user,
the sender (47) is configured to send the speech to another user associated with the user; or the intention of the user is requesting for playing multimedia information, and the processor (42) is configured to obtain the multimedia information requested by the user from a cloud server via a wireless network, and to play the multimedia information,
the receiver (41) is further configured to receive a call request sent by another user associated with the user before receiving the multimodal input signal,
the processor (42) is further configured to prompt the user whether to answer the call; or
the terminal device further comprise a camera (46), wherein the intention of the user is answering the call,
the processor (42) is configured to establish a call connection between the user and another user associated with the user, to control the camera (46) to recognize a direction of a speaker and to turn to the direction of the speaker during the call, to start a video-based face tracking function to make the camera (46) track a face concerned by another user after another user associated with the user clicks the face concerned by another user via an application installed in a smart terminal used by another user.

13. The terminal device according to any one of claims 8-12, further comprising a sensor (48), wherein the environmental sensor signals are configured to indicate environment information of the environment where the sensor is,
the processor (42) is further configured to warn of a danger, to output modes for processing the danger, and to control the camera (46) to shoot, if any of indexes in the environment information exceeds a predetermined warning threshold;
the processor (42) is further configured to control a state of a household appliance corresponding to an index reaching a state switching threshold via an smart home control platform, if any of the indexes in the environment information reaches a state switching threshold.

14. The terminal device according to any one of claims 8-13, wherein the intention of the user is obtaining an answer to a question,
the processor (42) is configured to search for the question included in a speech input by the user, to obtain the answer to the question, and to output the answer to the user;
the processor (42) is further configured to obtain recommended information associated with the question included in the speech input by the user after outputting the answer to the user, and to output the recommended information to the user.

15. A computer readable storage medium comprising a computer program for executing the human-computer interactive method based on artificial intelligence according to any one of claims 1-7, when running on a computer.
